# EUROPÄISCHE PATENTANMELDUNG

(11) **EP 4 293 249 A1**
(43) Veröffentlichungstag der Anmeldung: **20.12.2023**
(21) Anmeldenummer: 23166257.8
(22) Anmeldetag: 03.04.2023
(51) Int. Cl.: F16F 7/104

(54) **SCHWINGUNGSTILGER MIT DOPPELTER MASSE**

(30) Priorität: 23.05.2022 DE 102022112966
(71) Anmelder: Vibracoustic SE, 64293 Darmstadt (DE)
(72) Erfinder: Bock, Thomas, 79112 Freiburg i. Br. (DE); Willin, Frank, 79282 Ballrechten-Dottingen (DE); Suetterlin, Tim, 79395 Neuenburg (DE); Götz, Frederik, 79206 Breisach (DE)
(74) Vertreter: Patentanwälte Olbricht Buchhold Keulertz

(57) **Zusammenfassung**

Vorgeschlagen wird ein Schwingungstilger, umfassend eine Trägerplatte (4) mit zwei Seiten (6), welche eine Bohrung (8, 10) aufweist, zu jeder der Seiten (6) ein Masseelement (12, 16), welche ein Massepaar (14, 18) ausbilden, umfassend einen Verbindungsbolzen (20, 22), der die Bohrung (8, 10) durchragt und beidseits in die Masseelemente (12, 16) unter Ausbildung einer jeweiligen Halteverbindung einragt zu deren Fixierung an der Trägerplatte (4).

## Beschreibung

Die Erfindung betrifft einen Schwingungstilger gemäß dem Oberbegriff von Anspruch 1.

Es sind aus der Praxis Schwingungstilger bekannt, welche ein Halteblech umfassen, welches eine Tilgermasse trägt. Die Tilgermasse ist über einen Elastomerkörper mittels Bindemittel an das Halteblech anvulkanisiert. Das Halteblech weist Löcher auf, durch welche eingepresste Bolzen als Verliersicherung in die Masse eingreifen ohne Berührung des Halteblechs. Es sind aus der Praxis zudem Schwingungstilger bekannt, welche ein Halteblech umfassen, welches auf jeder Seite eine Tilgermasse trägt, um zwei unterschiedliche Eigenfrequenzen einstellen zu können. Die Tilgermassen sind jeweils über einen Elastomerkörper mittels Bindemittel an das Halteblech anvulkanisiert. Verliersicherungen sind nicht möglich, da beide Seiten des Halteblechs mittels Tilgermasse überdeckt sind. Dadurch, dass die Tilgermasse in ein Vulkanisationswerkzeug eingelegt werden müssen, entstehen hohe Kosten für die Produktion und die Werkzeuge. Zusätzlich muss eine Verliersicherungen integriert werden, damit bei Gummibruch die Tilgermasse gesichert wird. Die Eigenfrequenz des Schwingungstilgers kann nur über die Härte des Elastomers (Schubmodul) angepasst werden. Eine Einstellung des Schwingungstilgers auf zwei Frequenzen unabhängig voneinander ist nur schwerlich möglich.

Bekannt sind zudem Schwingungstilger mit verschraubter Tilgermasse am Halteblech, wie beispielsweise in der DE 10 2019 104 386 A1. Die Schraubverbindung führt jedoch zu hohen Fertigungskosten.

Aufgabe der Erfindung ist es daher, einen Schwingungstilger zu schaffen, welcher mit möglichst wenigen Bauteilen möglichst viele Tilgermassen prozesssicher und dauerhaft bei kostengünstiger Herstellung fixiert.

Hauptmerkmale der Erfindung sind im kennzeichnenden Teil von Anspruch 1 angegeben. Ausgestaltungen sind Gegenstand der Ansprüche 2 bis 10.

Erfindungsgemäß wird daher ein Schwingungstilger vorgeschlagen, umfassend eine Trägerplatte mit zwei Seiten, welche eine Bohrung aufweist, und zu jeder der Seiten ein Masseelement, welche ein Massepaar ausbilden. Der Schwingungstilger umfasst zudem einen Verbindungsbolzen, der die Bohrung der Trägerplatte durchragt und beidseits in die Masseelemente unter Ausbildung einer jeweiligen Halteverbindung einragt zu deren Fixierung an der Trägerplatte.

Die Erfindung sieht also vor, dass einem einzigen Verbindungsbolzen zwei Masseelemente zugeordnet und davon gehalten sind. Dadurch kann die Anzahl an Halteelementen pro Masseelemente rechnerisch auf 0,5 reduziert und die Anzahl an Bauteilen erheblich reduziert werden.

Dadurch, dass die Masseelemente beidseits der Trägerplatte angeordnet sind und nur ein Verbindungsbolzen für das Massepaar vorgesehen ist, kann ein Bauraum bestmöglich genutzt werden. Zudem bildet das Massepaar ein System aus, das auf eine gewünschte Resonanzfrequenz einstellbar ist.

Dadurch, dass die jeweilige Halteverbindung in dem entsprechenden der Masseelemente ausgebildet ist, muss kein Bauraum außerhalb des Masseelements für die Halteverbindung vorgesehen werden. Auch dadurch kann ein Bauraum bestmöglich genutzt und der Schwingungstilger kleinstmöglich ausgebildet werden.

Die beiden Seiten der Trägerplatte können entgegengesetzten Raumrichtungen zugewandt sein. Die zumindest eine Bohrung in der Trägerplatte kann von der einen Seite der Trägerplatte zur anderen Seite der Trägerplatte führen, also eine Durchgangsbohrung sein. Die Masseelemente können Tilgermassen sein. Eine Tilgermasse oder ein Masseelement kann Teil eines Masse-Feder-System sein, dessen Eigenfrequenz auf die zu eliminierende Schwingfrequenz einstellbar ist und vornehmlich der Tilgung dient. Die Masseelemente können jeweils eine Bohrung aufweisen, in welche der Verbindungsbolzen einragt. Die Masseelemente können in sich abgeschlossene und/oder separate Teile und/oder vollständige Teile sein. Sie müssen daher keinen Abschnitt eines größeren oder übergeordneten Masseelements darstellen. Die Trägerplatte kann einen ebenen Trageabschnitt aufweisen, in welchem die zumindest eine Bohrung ausgebildet ist. Dadurch ist eine flache Geometrie für die Masseelemente gewährleistet, die selbst kostengünstig herstellbar und bauraumsparend ist. Der Verbindungsbolzen kann beidends jeweils einen Halteabschnitt aufweisen, der mit dem entsprechenden Masseelement die Halteverbindung ausbildet.

Der Schwingungstilger gemäß dieser Offenbarung ist grundsätzlich im unbelasteten/unbetriebenen Zustand beschrieben, wobei auf Belastung- und Betriebsfälle separat hingewiesen ist.

Gemäß einer denkbaren Weiterbildung des erfindungsgemäßen Schwingungstilgers kann das Massepaar oder jedes der Massepaare von jeweils einem einzigen Verbindungsbolzen fixiert sein. Dadurch können möglichst wenige Bauteile verwendet werden. Zudem ist eine Montage der Masseelemente am entsprechenden Verbindungsbolzen vereinfacht, da eine exakte Ausrichtung bei Montage an mehreren Fixierelementen entfällt.

Gemäß einer denkbaren Weiterbildung des erfindungsgemäßen Schwingungstilgers kann der Verbindungsbolzen einstückig ausgebildet sein. Einstückig soll bedeuten, dass er aus einem Stück hergestellt ist. Dadurch können anfällige Füge- oder Verbindungsstellen vermieden werden.

Gemäß einer denkbaren Weiterbildung des erfindungsgemäßen Schwingungstilgers kann der zumindest eine Verbindungsbolzen spiegelsymmetrisch bezüglich seiner Quermittelebene und/oder rotationssymmetrisch bezüglich seiner Zentrallängsachse ausgebildet sein. Die Rotationssymmetrie kann eine Rotationssymmetrie im mathematisch engeren Sinne sein - eine Drehung um jeden beliebigen Winkel bildet den Verbindungsbolzen auf sich selbst ab. Die Rotationssymmetrie kann alternativ eine Rotationssymmetrie im mathematisch weiteren Sinne sein, wobei die Rotationssymmetrie eine vielfache Zähligkeit aufweisen kann, wobei die Zähligkeit größer als 2 sein kann. Die Symmetrien vereinfachen eine Montage des Verbindungsbolzens, da seine Einbaulage unerheblich ist. So entsteht ein einfach zu kontrollierender Montageprozess. Die Symmetrien gewährleisten auch identische Tilgerverhalten der beiden Masseelemente.

Gemäß einer denkbaren Weiterbildung des erfindungsgemäßen Schwingungstilgers kann die Trägerplatte aus einem Metall oder Kunststoff, insbesondere einem Thermo- oder Duroplasten, gefertigt sein und/oder die Masseelemente aus einem elastomeren oder metallischen Werkstoff gefertigt sein, beispielsweise als Vulkanisationsteil oder Metallgussteil, und/oder der zumindest eine Verbindungsbolzen aus einem Metall oder Kunststoff, insbesondere einem Thermo- oder Duroplasten, gefertigt sein. Die Masseelemente können Tilgermassen sein.

Die Vorteile einer Trägerplatte aus den genannten Materialien liegen darin, dass sie steif genug und zugleich ausreichend zäh ist, um dauerhaft Schwingungen ein- und ausleiten zu können. Die Vorteile von Masseelementen aus den genannten Materialien liegen darin, dass sie bei vergleichsweise geringen Kosten ein hohes Gewicht aufweisen, insbesondere bei einem metallischen Werkstoff. Die Vorteile vom Verbindungsbolzen aus den genannten Materialien liegen darin, dass damit hohe Kräfte übertragbar sind, insbesondere bei einem metallischen Verbindungsbolzen. Bei Verwendung von Masseelementen eines Massepaars aus Metall und einem Verbindungsbolzen aus Metall ergibt sich somit eine Metall-Metall-Verbindung, die dauerhaft und sicher ist.

Gemäß einer Weiterbildung des erfindungsgemäßen Schwingungstilgers können die Halteverbindungen Verschraubungen, Verrastungen und/oder Verpressungen sein. Denkbar ist auch ausschließlich eine dieser beiden letztgenannten Halteverbindungen.

Bei der Verschraubung kann der zumindest eine Verbindungsbolzen für jede der Halteverbindungen außenumfangsseitig ein Gewinde aufweisen, beispielsweise im Halteabschnitt. Das Gewinde kann in ein Gewindegegenstück in dem Masseelement eingreifen, wobei das Gewindegegenstück ein separates Teil zum Masseelement sein kann. Das Gewindegegenstück kann beispielsweise eine in dem Masseelement eingebettete Hülse mit Innengewinde sein. Dadurch muss das Material des Masseelements nicht geeignet sein, um das Gewinde auszubilden und davon ausgehende Verschraubungskräfte direkt aufzunehmen. Das Gewinde kann alternativ gewindeschneidend oder gewindegeschnitten in das jeweilige Masseelement einragen. Dadurch sind sehr hohe reine Axialkräfte (bezogen auf die Zentrallängsachse des Verbindungsbolzens) nötig, um die Fixierung aufzulösen.

Bei der Verrastung kann der zumindest eine Verbindungsbolzen für jede der Halteverbindungen außenumfangsseitig Rastelemente, wie Rastrampen, oder Rastgegenelemente, wie Rastnuten, aufweisen, beispielsweise im Halteabschnitt. Die Rastelemente oder Rastgegenelemente können in das entsprechende Gegenstück von Rastelement und Rastgegenelement in dem Masseelement eingreifen oder aber Rastelemente können in das Material des jeweiligen Masseelements unter elastischer Verformung des Masseelements eingreifen. Im letzteren Fall weist das Masseelement kein dezidiertes Gegenstück für die Rastelemente auf, so dass hier eine vorteilhafte Kombination von Kraft- und Formschluss erfolgen kann. Dadurch ist eine Montage durch einfaches Aufstecken des Masseelements auf den Verbindungsbolzen in Axialrichtung (bezogen auf die Zentrallängsachse des Verbindungsbolzens) möglich, wobei zugleich eine ausreichende Verliersicherung gewährleistet ist. Durch den Verzicht auf eine Verschraubung und aufgrund einer rein axialen Krafteinbringung entsteht zudem kein Risiko der torsionalen Verdrehung eines Masseelements oder torsionalen Vorspannung des Materials des Masseelements.

Bei der Verpressung kann der zumindest eine Verbindungsbolzen für jede der Halteverbindungen außenumfangsseitig eine umfangsseitig durchgehende oder abschnittsweise Rotationsfläche und/oder Längsstrukturen, wie Längszähne oder Längsstege, aufweisen, beispielsweise im Halteabschnitt. Die Rotationsfläche kann eine großflächige Verpressung ermöglichen, während die Längsstrukturen unter bereichsweiser elastischer Verformung des Masseelements dort eingreifen können. Insgesamt ermöglicht eine Verpressung eine sehr einfache Montage, da insbesondere kein Verschrauben und kein Anvulkanisieren nötig ist. Durch den Verzicht auf eine Verschraubung und aufgrund einer rein axialen Krafteinbringung entsteht zudem kein Risiko der torsionalen Verdrehung eines Masseelements oder torsionalen Vorspannung des Materials des Masseelements. Die Längsstrukturen dienen auch einer Entlüftung der Sacklochbohrung im Masseelement beim Verpressen. Beim Aufschieben des Masseelements auf den Verbindungsbolzen kann die verdrängte Luft der Sacklochbohrung entlang der Längsstrukturen aus der Sacklochbohrung entweichen. Dadurch kann ein negativer Überdruck in der Sacklochbohrung stirnseitig des Verbindungsbolzens und eine erschwerte Verpressung gegen diesen Überdruck vermieden werden. Denkbar ist zudem, dass das Übermaß zwischen den Passflächen von Verbindungsbolzen (Halteabschnitt) und Masseelementen derart gering ist, dass die Verpressung beispielsweise durch ausschließliches Längseinpressen hergestellt werden kann, wobei dabei die beiden Bauteile mit einer Presse gefügt werden können. Auf zu großes Übermaß kann verzichtet werden, denn es lässt sich die Pressverbindung nicht mehr alleine durch einen Einpressdruck herstellen. Dafür verwendete Verfahren, wie Schrumpfen und Dehnen, sind aus Sicht von Lebensdauer und Sicherheit nicht nötig.

Gemäß einer Weiterbildung des erfindungsgemäßen Schwingungstilgers kann zwischen jedem Masseelement eines Massepaars und der Trägerplatte jeweils eine Federvorrichtung, vorzugsweise eine Federscheibe, angeordnet sein. Das entsprechende Masseelement ist somit unmittelbar über die Federvorrichtung und die Trägerplatte an ein zu bedämpfendes Fahrzeugteil schwingfähig koppelbar. Fängt das mit dem Schwingungstilger verbundene Fahrzeugteil zu schwingen an, schwingt das Masseelement mit einer gewissen Verzögerung mit, wobei eine Bedämpfung der Schwingungen über die Federvorrichtung erfolgt. Denkbar ist, dass die Federvorrichtung eine elastomere Federvorrichtung ist. Zudem kann die dort angeordnete Federvorrichtung das jeweilige Masseelement von der Trägerplatte distanzieren. Ein Anschlagen der Federvorrichtung an die Trägerplatte kann somit ausgeschlossen und ein freies Schwingen der Masseelemente im Betrieb ermöglicht werden.

Gemäß einer denkbaren Weiterbildung des erfindungsgemäßen Schwingungstilgers können die Masseelemente nicht an der Trägerplatte anliegen oder diese berühren. Hier können die Federelemente und/oder der entsprechende Verbindungsbolzen das/die vorzugsweise einzige(n) zwischengeschaltete(n) Bauteil(e) zwischen jeweiligem Masseelement und Trägerplatte sein, d.h. die Masseelemente können ausschließlich über die Federelemente Schwingungen an die Trägerplatte abgeben und/oder aufnehmen. In vorteilhafter Weise kann der entsprechende Verbindungsbolzen ebenfalls nicht an der Trägerplatte anliegen oder diese berühren. Denkbar ist, dass der entsprechende Verbindungsbolzen ausschließlich mit den Masseelementen des Massepaars oder zusätzlich noch mit den Federelementen verbunden ist, beispielsweise durch Anliegen. Diese Anordnung verbessert ein freies Schwingen der Masseelemente im Betrieb.

Gemäß einer denkbaren Weiterbildung des erfindungsgemäßen Schwingungstilgers können die Federvorrichtungen frei von einer stoffschlüssigen Verbindung sein, also stoffschlussfrei. Die jeweilige Federvorrichtung ist daher nicht mit einem weiteren Bauteil stoffschlüssig verbunden, beispielsweise mittels Vulkanisation. Dadurch ist eine modulare Bauweise möglich, denn eine Einstellung einer gewünschten Frequenz kann durch ein einfaches Austauchen der Federvorrichtung durch eine andere Federvorrichtung mit abweichenden Tilgereigenschaften erfolgen.

Gemäß einer denkbaren Weiterbildung des erfindungsgemäßen Schwingungstilgers können die beiden Federvorrichtungen eines Massepaares identisch sein. Dadurch kann das Massepaar sehr gut auf eine zu tilgende Frequenz eingestellt werden, wobei als Parameter hierfür beispielsweise ein Außendurchmesser, ein Innendurchmesser, eine axiale Dicke und/oder eine Materialwahl dienen können. Bei mehreren Massepaaren ist denkbar, dass die beiden Federvorrichtungen eines Massepaares identisch sind, jedoch jedes Massepaar unterschiedliche Federvorrichtungen aufweist. Dadurch können mehrere Frequenzen in vorteilhafter Weise mit nur einem einzigen Schwingungstilger bedämpft werden.

Gemäß einer denkbaren Weiterbildung des erfindungsgemäßen Schwingungstilgers können die beiden Federvorrichtungen eines Massepaares in die Bohrung der Trägerplatte einragen. Dadurch kann ein Verrutschen der Federvorrichtungen quer zur Zentrallängsachse des Verbindungsbolzens verhindert werden. Das Einragen kann mittels eines sich in Axialrichtung (bezogen auf die Zentrallängsachse des Verbindungsbolzens) erstreckenden Ringflansches und/oder mittels elastischer Verformung der Federvorrichtungen erfolgen. Letzteres Einragen kann beispielsweise bei einer flachen Federvorrichtungen dadurch erfolgen, dass die Halteverbindung eine axial wirkende Vorspannung erzeugt, welche die Federvorrichtungen zumindest abschnittsweise in die Bohrung der Trägerplatte hinein verformt. Dadurch kann zwischen Bohrungsrand und Federvorrichtung ein Formschluss entstehen. Vorzugsweise ist hierfür der Durchmesser einer Bohrung in der Federvorrichtung kleiner als der Durchmesser der Bohrung in der Trägerplatte.

Gemäß einer Weiterbildung des erfindungsgemäßen Schwingungstilgers können die Federvorrichtungen jeweils eine Bohrung aufweisen, welche am Verbindungsbolzen radialzentriert anliegen kann. Die Bohrungen können auch jeweils innenumfangsseitig einen Abstützflansch aufweisen, welcher am Verbindungsbolzen radialzentriert anliegen kann. Der Abstützflansch kann sich nach radial innen erstrecken. Dadurch kann die Federvorrichtung vom Verbindungsbolzen gehalten und zugleich zentrisch zur Halteverbindung angeordnet sein. Dadurch ergibt sich ein vorteilhaftes und gleichmäßiges Tilgerverhalten. Dadurch kann die jeweilige Federvorrichtung raumsparend angeordnet werden, wobei sie keines separaten Fixierungsmittels bedarf. Die Federvorrichtung kann vom Verbindungsbolzen fixiert werden. Diese Bohrung kann eine Durchgangsbohrung sein.

Gemäß einer Weiterbildung des erfindungsgemäßen Schwingungstilgers können die Masseelemente des Massepaars und/oder der Verbindungsbolzen des Massepaars und/oder die Federvorrichtungen des Massepaars spiegelsymmetrisch bezüglich der Trägerplatte ausgebildet und/oder angeordnet sein. Referenz kann die der Abschnitt der Trägerplatte sein, welche die Bohrung aufweist. Dadurch ergibt sich ein vorteilhaftes und gleichmäßiges Tilgerverhalten. Gleiches kann für mehrere Massepaare gelten. Es sind daher zu beiden Seiten der Trägerplatte Masseelemente vorsehbar, die im Betrieb eine gleichmäßige, mitunter lineare Bewegung erreichen und dadurch ein Taumeln vermeiden können.

Gemäß einer denkbaren Weiterbildung des erfindungsgemäßen Schwingungstilgers können die Masseelemente eines Massepaares oder die Masseelemente aller Massepaare identisch sein, insbesondere bezüglich Material und Geometrie. Dadurch können hier Gleichteile verwendet werden, wodurch Herstellungs- und Montagekosten reduzierbar sind, da ihre Einbaulage von deren Geometrie unabhängig sein kann.

Gemäß einer Weiterbildung des erfindungsgemäßen Schwingungstilgers können die Masseelemente des Massepaars durchgangsbohrungsfrei ausgebildet sein und/oder jeweils eine Sacklochbohrung aufweisen, in welche der Verbindungsbolzen einragt. Eine derartige Sacklochbohrung schützt den Verbindungsbolzen vor Umwelteinflüssen dadurch, dass die Bohrung nur einends offen ist. Umwelteinflüsse können beispielsweise Staub und Feuchtigkeit sein. Dadurch kann auf einen entsprechenden Oberflächenschutz des Verbindungsbolzens in diesem Bereich verzichtet werden. Gleiches kann für mehrere Massepaare gelten.

Gemäß einer Weiterbildung des erfindungsgemäßen Schwingungstilgers kann/können die Trägerplatte und/oder die Masseelemente eines Massepaars und/oder die Federvorrichtungen eines Massepaars einen abgeschlossenen Innenraum ausbilden, in welchem der Verbindungsbolzen angeordnet ist. Ein derartiger Innenraum schützt den Verbindungsbolzen vor Umwelteinflüssen dadurch, dass er von einem oder mehreren Elementen eingebettet oder umgeben und von der Umgebung getrennt ist. Umwelteinflüsse können beispielsweise Staub und Feuchtigkeit sein. Dadurch kann auf einen entsprechenden Oberflächenschutz des gesamten Bolzens verzichtet werden. Zudem sind nur wenige Bauteile nötig, um diesen Innenraum zu begrenzen und zugleich die Tilgerfunktion zu gewährleisten.

Gemäß einer Weiterbildung des erfindungsgemäßen Schwingungstilgers können die Masseelemente des Massepaars rotationssymmetrisch bezüglich des entsprechenden Verbindungsbolzens ausgebildet und/oder angeordnet sein. Der Verbindungsbolzen kann daher in vorteilhafter Weise in einen zentralen Punkt des jeweiligen Masseelements greifen, beispielsweise kann der Verbindungsbolzen in ein Flächenzentrum derjenigen Seite des Masseelements eingreifen, die der Trägerplatte zugewandt ist. Die Rotationssymmetrie kann eine Rotationssymmetrie im mathematisch engeren Sinne sein - eine Drehung um jeden beliebigen Winkel bildet das Masseelement auf sich selbst ab. Die Rotationssymmetrie kann alternativ eine Rotationssymmetrie im mathematisch weiteren Sinne sein, wobei die Rotationssymmetrie eine vielfache Zähligkeit aufweisen kann, wobei die Zähligkeit größer als 2 sein kann, vorzugsweise genau 4 beträgt. Durch diese Symmetrie können unerwünschte Belastungen und Schwingungen der Masseelemente und ein Selbstlösen durch ein dezentrales Eingreifen des Verbindungsbolzens vermieden werden. Zudem können die Masseelemente als Gleichteile hergestellt werden, da ihre Einbaulage von deren Geometrie unabhängig sein kann.

Gemäß einer Weiterbildung des erfindungsgemäßen Schwingungstilgers kann der Verbindungsbolzen des Massepaars für jedes Masseelement des Massepaars jeweils eine Positionierungsschulter aufweisen. Eine Positionierungsschulter kann ein außenumfangsseitig angeordneter abschnittsweiser oder durchgehender Durchmessersprung sein, wobei eine Anlagefläche der Positionierungsschulter dem entsprechenden Masseelement zugewandt sein kann. Die Positionierungsschulter kann eine axiale Endlage des jeweiligen Masseelements am Verbindungsbolzen definieren. Mittels der Positionierungsschultern ist zudem in konstruktiv einfacher Weise ein Abstand der Masseelemente eines Massepaars zueinander einstellbar. Über den Abstand der Masseelemente eines Massepaars zueinander kann somit eine präzise Einstellung der Eigenfrequenz erfolgen.

Gemäß einer Weiterbildung des erfindungsgemäßen Schwingungstilgers kann zu jeder der Seiten ein weiteres Masseelement, welche ein weiteres Massepaar ausbilden, angeordnet sein. Für dieses Massepaar können die hier offenbarten Merkmale in identischer Weise gelten. Es ist also denkbar, zwei oder mehr identische Massepaare an der einen Trägerplatte anzuordnen, wie auch mehrere unterschiedliche gestaltete Massepaare. Für dieses weitere Massepaar kann die Trägerplatte eine weitere Bohrung umfassen. Der Schwingungstilger kann zudem einen weiteren Verbindungsbolzen für dieses weitere Massepaar umfassen, der die weitere Bohrung durchragt und beidseits in die weiteren Masseelemente unter Ausbildung einer jeweiligen Halteverbindung einragt zu deren Fixierung an der Trägerplatte. Mittels dieses weiteren Massepaars kann der Schwingungstilger zudem zur Tilgung einer weiteren Resonanzfrequenz ausgelegt werden.

Gemäß einer denkbaren Weiterbildung des erfindungsgemäßen Schwingungstilgers können die Masseelemente benachbarter Massepaare vollständig zueinander beabstandet sein. Dadurch liegen diese Masseelemente nicht aneinander an und behindern nicht das jeweilige freie Schwingen der Masseelemente im Betrieb.

Gemäß einer denkbaren Weiterbildung des erfindungsgemäßen Schwingungstilgers kann der zumindest eine Verbindungsbolzen beidseits seiner Quermittelebene jeweils drei unmittelbar aneinander angrenzende Bereich aufweisen, nämlich einen quermittelebenenahen Anlageabschnitt, daran in Axialrichtung angrenzend die Positionierungsschulter und daran in Axialrichtung angrenzend den Halteabschnitt. Dadurch kann der Verbindungsbolzen kompakt ausgestaltet sein. Der Anlageabschnitt kann den größten Außendurchmesser aufweisen und/oder an der Federvorrichtung anliegen und/oder in der Bohrung der Tragplatte angeordnet sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen erfindungsgemäßen Schwingungstilger in Explosionsdarstellung,
- Fig. 2: den Schwingungstilger nach Fig. 1 in einer Schnittansicht, und

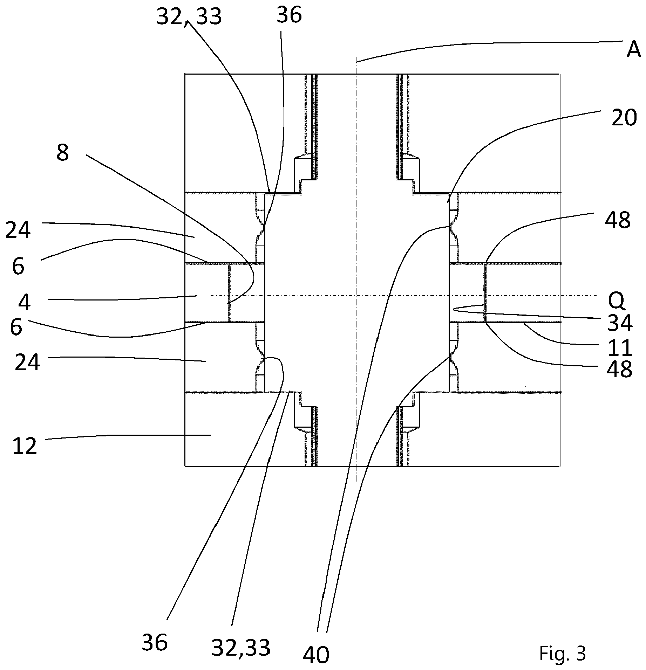

- Fig. 3: eine Detailansicht aus Fig. 2.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

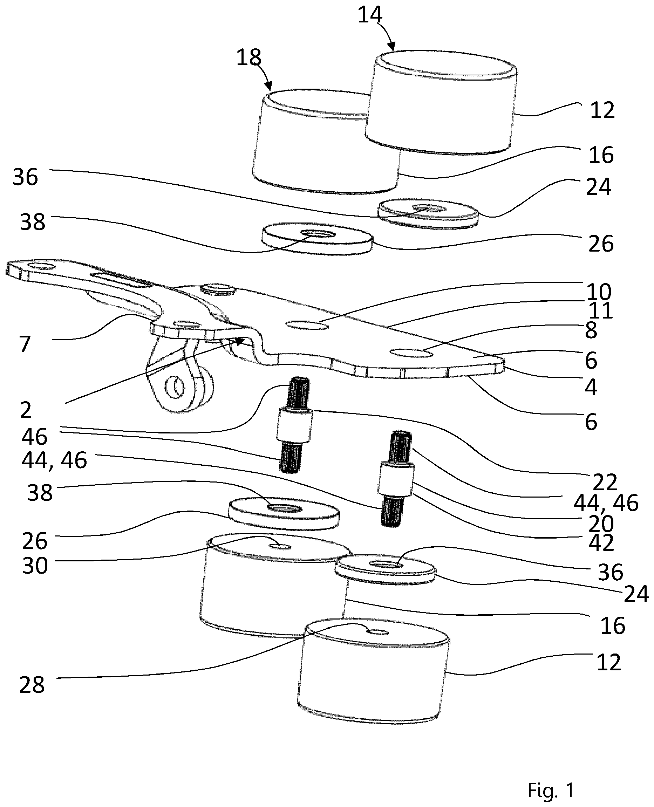

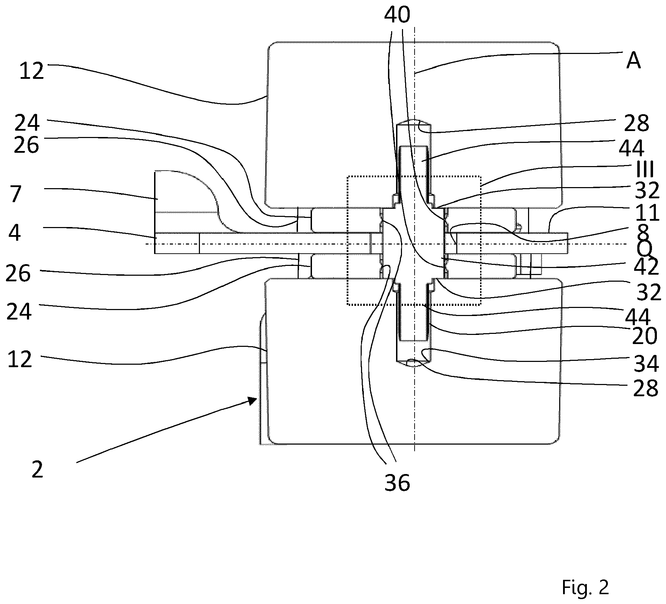

Figur 1 zeigt in einer Explosionsdarstellung die einzelnen Bauteile eines Schwingungstilgers 2, wobei dieser Schwingungstilger 2 in Figur 2 nach Montage gezeigt ist.

Der Schwingungstilger 2 umfasst eine Trägerplatte 4, welche zwei Seiten 6 aufweist, die entgegengesetzten Raumrichtungen zugewandt sind. Die Trägerplatte 4 umfasst eine nicht weiter bezeichnete Anbindungsgeometrie 7 zur Anbindung des Schwingungstilgers 2 an ein zu bedämpfendes Bauteil. Die Trägerplatte 4 umfasst zudem zwei Bohrungen 8, 10, welche von der einen Seite 6 der Trägerplatte 4 zur anderen Seite 6 der Trägerplatte 4 führen, also Durchgangsbohrungen sind. Die zwei Bohrungen 8, 10 sind in einem ebenen Trageabschnitt 11 der Trägerplatte 4 ausgebildet.

Der Schwingungstilger 2 umfasst zudem zwei Massepaare 14, 18. Jedes der Massepaare 14, 18 umfasst zwei Masseelemente 12, 16, welche Tilgermassen sind. Von jedem der Massepaare 14, 18 ist jeweils eines der Masseelemente 12, 16 zu einer der beiden Seiten 6 angeordnet. Die Masseelemente 12, 16 der benachbarten Massepaare 14, 18 sind vollständig zueinander beabstandet angeordnet. Die Masseelemente 12, 16 weisen jeweils eine Bohrung auf, die als Sacklochbohrung 28, 30 ausgeführt ist. Die vier Masseelemente 12, 16 sind im vorliegenden Fall identisch ausgebildet. Sie sind zudem spiegelsymmetrisch bezüglich der Trägerplatte 4 oder des Trägerabschnitts 11 ausgebildet und angeordnet. Sie sind des Weiteren rotationssymmetrisch (Zähligkeit = 4) bezüglich eines entsprechenden Verbindungsbolzens 20, 22 ausgebildet und angeordnet.

Der Schwingungstilger 2 umfasst zudem für jedes der zwei Massepaare 14, 18 jeweils einen einstückigen Verbindungsbolzen 20, 22. Der Verbindungsbolzen 20 ragt im Montagezustand durch die Bohrung 8 der Trägerplatte 4 und in die Sacklochbohrungen 28 der Masseelemente 12 hinein. Der Verbindungsbolzen 22 ragt im Montagezustand durch die Bohrung 10 der Trägerplatte 4 und in die Sacklochbohrungen 30 der Masseelemente 16 hinein. Die Verbindungsbolzen 20, 22 liegen nicht direkt an der Trägerplatte 4 an oder berühren diese. In den Sacklochbohrungen 28, 30 bilden die jeweiligen Masseelemente 12, 16 mit dem jeweiligen Verbindungsbolzen 20, 22 eine Halteverbindung in Form einer Verpressung über Halteabschnitte 44 aus.

Somit sind die Masseelemente 12, 16 an der Trägerplatte 4 mittels jeweils einem einzigen Verbindungsbolzen 20, 22 fixiert. Die Verbindungsbolzen 20, 22 sind identisch ausgestaltet und spiegelsymmetrisch bezüglich ihrer jeweiligen Quermittelebene Q und rotationssymmetrisch im mathematisch weiteren Sinne bezüglich ihrer jeweiligen Zentrallängsachse A ausgebildet. Jeder der Verbindungsbolzen 20, 22 weist beidseits seiner Quermittelebene Q einen Anlageabschnitt 42 auf, die den größten Durchmesser haben. Daran grenzt in Axialrichtung eine Positionierungsschulter 32 an. Daran grenzt in Axialrichtung der Halteabschnitt 44 an. Die Verbindungsbolzen 20, 22 der Massepaare sind spiegelsymmetrisch bezüglich der Trägerplatte 4 ausgebildet und angeordnet. Jede der Positionierungsschultern 32 weist eine Anlagefläche 33 auf und ist als außenumfangsseitig angeordneter und durchgehender Durchmessersprung ausgebildet. Die Anlagefläche 33 der Positionierungsschulter 32 ist dem entsprechenden Masseelement 12, 16 zugewandt, wobei das Masseelement 12, 16 gegen diese Positionierungsschulter 32 anliegt. Ersichtlich ist, dass jeder Halteabschnitt 44 Längsstrukturen in Form von Längszähnen 46 aufweist. Diese Längszähne 46 drücken sich in das Material des jeweiligen Masseelements 12, 16 zur Ausbildung eines Kraft- und Formschlusses. Benachbarte Längszähne 46 sind in Umfangsrichtung von Längsrillen beabstandet.

Der Schwingungstilger 2 umfasst ferner für jedes Masseelement 12, 16 der zwei Massepaare 14, 18 jeweils eine Federvorrichtung in Form einer Federscheibe 24, 26. Die Federscheiben 24, 26 sind separate Teile und stoffschlussfrei angeordnet. Die Federscheiben 24, 26 sind zwischen dem entsprechenden Masseelement 12, 16 und der Trägerplatte 4 angeordnet. Daher liegen die Masseelemente 12, 16 nicht an der Trägerplatte 4 an oder berühren diese. Die Federscheiben 24, 26 weisen jeweils eine Bohrung 36, 38 auf, durch welche der entsprechende Verbindungsbolzen 20, 22 greift. Die Bohrungen 36, 38 der Federscheiben 24, 26 weisen jeweils innenumfangsseitig einen Abstützflansch 40 auf, welcher am Verbindungsbolzen radialzentriert anliegt. Die Federscheiben 24, 26 eines jeden Massepaars 14, 18 sind identisch ausgebildet und spiegelsymmetrisch bezüglich der Trägerplatte 4 oder des Trägerabschnitts 11 ausgebildet und angeordnet. Jedoch weist jedes Massepaar 14, 18 unterschiedliche Federscheiben 24, 26 auf. Die beiden Federscheiben 24 des Massepaars 14 weisen nämlich einen kleineren Außendurchmesser als die beiden Federscheiben 26 des Massepaars 18 auf. Dadurch bedämpfen die Massepaare 14, 18 unterschiedliche Frequenzen. Die Federscheiben 24, 26 weisen jeweils einen Innendurchmesser auf, der kleiner als der Durchmesser der Bohrungen 8, 10 der Trägerplatte 4 ist. Die Federscheiben 24, 26 ragen daher in die Bohrungen 8, 10 ein, da sie von den Masseelement 12, 16 derart vorgespannt werden, dass sie im Bereich des Innendurchmessers elastisch in die jeweilige Bohrungen 8, 10 verformt werden. Dadurch kann zwischen einem Bohrungsrand 48 der jeweiligen Bohrung 8, 10 und der jeweiligen Federscheibe 24, 26 ein Formschluss entstehen.

Die Trägerplatte 4, die Masseelemente 12, 16 jedes Massepaars 14, 18 und die Federscheibe 24, 26 eines jeden Massepaars 14, 18 bilden einen zur Umgebung hin abgeschlossenen Innenraum 34 aus. In dem Innenraum 34 ist der jeweilige Verbindungsbolzen 20, 22 angeordnet.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 2: Schwingungstilger
- 4: Trägerplatte
- 6: Seite
- 7: Anbindungsgeometrie
- 8: Bohrung
- 10: Bohrung
- 11: Trageabschnitt
- 12: Masseelement
- 14: Massepaar
- 16: Masseelement
- 18: Massepaar
- 20: Verbindungsbolzen
- 22: Verbindungsbolzen
- 24: Federscheibe
- 26: Federscheibe
- 28: Sacklochbohrung
- 30: Sacklochbohrung
- 32: Positionierungsschulter
- 33: Anlagefläche
- 34: Innenraum
- 36: Bohrung
- 38: Bohrung
- 40: Abstützflansch
- 42: Anlageabschnitt
- 44: Halteabschnitt
- 46: Längszahn
- 48: Bohrungsrand

- A: Zentrallängsachse
- Q: Quermittelebene

## Patentansprüche

1. Schwingungstilger, umfassend
eine Trägerplatte (4) mit zwei Seiten (6), welche eine Bohrung (8, 10) aufweist, und zu jeder der Seiten (6) ein Masseelement (12, 16), welche ein Massepaar (14, 18) ausbilden, **gekennzeichnet durch** einen Verbindungsbolzen (20, 22), der die Bohrung (8, 10) durchragt und beidseits in die Masseelemente (12, 16) unter Ausbildung einer jeweiligen Halteverbindung einragt zu deren Fixierung an der Trägerplatte (4).

2. Schwingungstilger nach Anspruch 1, **dadurch gekennzeichnet, dass** die Halteverbindungen Verschraubungen, Verrastungen und/oder Verpressungen sind.

3. Schwingungstilger nach Anspruch 1 oder 2, **dadurch gekennzeichnet, dass** zwischen jedem Masseelement (12, 16) eines Massepaars (14, 18) und der Trägerplatte (4) jeweils eine Federvorrichtung, vorzugsweise eine Federscheibe (24, 26), angeordnet ist.

4. Schwingungstilger nach Anspruch 3, **dadurch gekennzeichnet, dass** die Federvorrichtungen jeweils eine Bohrung (36, 38) aufweisen, welche am Verbindungsbolzen (20, 22) radialzentriert anliegt, oder die Bohrungen (36, 38) jeweils innenumfangsseitig einen Abstützflansch (40) aufweisen, welcher am Verbindungsbolzen (20, 22) radialzentriert anliegt.

5. Schwingungstilger nach einem der vorstehenden Ansprüche, **dadurch gekennzeichnet, dass** die Masseelemente (12, 16) des Massepaars (14, 18) und/oder der Verbindungsbolzen (20, 22) des Massepaars (14, 18) und/oder die Federvorrichtungen des Massepaars (14, 18) spiegelsymmetrisch bezüglich der Trägerplatte (4) ausgebildet und/oder angeordnet sind.

6. Schwingungstilger nach einem der vorstehenden Ansprüche, **dadurch gekennzeichnet, dass** die Masseelemente (12, 16) des Massepaars (14, 18) durchgangsbohrungsfrei ausgebildet sind und/oder jeweils eine Sacklochbohrung (28, 30) aufweisen, in welche der Verbindungsbolzen (20, 22) einragt.

7. Schwingungstilger nach einem der vorstehenden Ansprüche, **dadurch gekennzeichnet, dass** die Trägerplatte (4) und/oder die Masseelemente (12, 16) des Massepaars (14, 18) und/oder die Federvorrichtungen des Massepaars (14, 18) einen abgeschlossenen Innenraum (34) ausbildet/ausbilden, in welchem der Verbindungsbolzen (20, 22) angeordnet ist.

8. Schwingungstilger nach Anspruch 6 oder 7 in Kombination mit 6, **dadurch gekennzeichnet, dass** die Masseelemente (12, 16) des Massepaars (14, 18) rotationssymmetrisch bezüglich des entsprechenden Verbindungsbolzens (20, 22) ausgebildet und/oder angeordnet sind.

9. Schwingungstilger nach einem der vorstehenden Ansprüche, **dadurch gekennzeichnet, dass** der Verbindungsbolzen (20, 22) des Massepaars (14, 18) für jedes Masseelement (12, 16) des Massepaars (14, 18) jeweils eine Positionierungsschulter (32) aufweist.

10. Schwingungstilger nach einem der vorstehenden Ansprüche, **dadurch gekennzeichnet, dass** zu jeder der Seiten (6) ein weiteres Masseelement (12, 16), welche ein weiteres Massepaar (14, 18) ausbilden, angeordnet ist.
